(19) **Europäisches Patentamt**

**European Patent Office**

**Office européen des brevets**

(11) **EP 1 254 928 A1**

(12) **EUROPÄISCHE PATENTANMELDUNG**

(43) Veröffentlichungstag:
06.11.2002 Patentblatt 2002/45

(51) Int Cl.⁷: **C09C 1/00**

(21) Anmeldenummer: 02007357.3

(22) Anmeldetag: 08.04.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.04.2001 DE 10120179**

(71) Anmelder: **MERCK PATENT GmbH**
**64293 Darmstadt (DE)**

(72) Erfinder:
• **Schoen, Sabine, Dr.**
**64287 Darmstadt (DE)**
• **Schmidt, Christoph, Dr.**
**65830 Kriftel (DE)**

(54) **Farbige Pigmente**

(57) Die vorliegende Erfindung betrifft farbige Pigmente auf der Basis von mehrfach beschichteten plättchenförmigen Substraten, die sich dadurch auszeichnen, dass sie

(A) eine Beschichtung mit einem Brechungsindex von n > 1,8 und einer Schichtdicke von 20 - 500 nm,
(B) eine farblose Beschichtung mit einem Brechungsindex von n ≤ 1,8 und einer Schichtdicke von 10 - 100 nm,
(C) eine farblose Beschichtung mit einem Brechungsindex von n > 1,8 und einer Schichtdicke von 20 - 500 nm,
(D) eine Belegung mit absorbierenden Pigmentpartikeln mit einer Teilchengröße von 1 - 500 nm, und

optional
(E) eine äußere Schutzschicht

enthalten,
sowie deren Verwendung in Farben, Lacken, Druckfarben, Kunststoffen, keramischen Materialien, Gläsern, zur Lasermarkierung, in kosmetischen Formulierungen und zur Herstellung von Pigmentpräparationen und Trockenpräparaten.

**Beschreibung**

Die vorliegende Erfindung betrifft farbige Pigmente auf der Basis von mehrfach beschichteten plättchenförmigen Substraten.

Glanz- oder Effektpigmente werden in vielen Bereichen der Technik. eingesetzt, insbesondere im Bereich der Autolacke, der dekorativen Beschichtung, im Kunststoff, in Farben, Druckfarben sowie in kosmetischen Formulierungen.

Glanzpigmente auf Basis transparenter plättchenförmiger Substrate, die keinen "harten" metallischen Glanz aufweisen, sind Gegenstand der WO 93/12182. Glimmerplättchen werden mit einer hochbrechenden Metalloxidschicht, wie z.B. $TiO_2$, und einer nicht selektiv absorbierenden Schicht belegt. Diese Pigmente zeigen in Abhängigkeit von der $TiO_2$-Schichtdicke in der Aufsicht eine bestimmte Interferenzfarbe, die mit schräger werdendem Blickwinkel zunehmend schwächer wird und schließlich nach grau bzw. schwarz abkippt. Die Interferenzfarbe ändert sich nicht, aber es ist eine Abnahme der Farbsättigung festzustellen.

In der JP 1992/93206 werden Glanzpigmente auf Basis von Glasplättchen bzw. Glimmerpartikeln beansprucht, die mit einer opaken Metallschicht und alternierenden $SiO_2$- und $TiO_2$-Schichten belegt sind.

Aus der EP 0 753 545 A2 sind goniochromatische Glanzpigmente auf Basis von mehrfach beschichteten, hochbrechenden, für sichtbares Licht zumindest teilweise durchlässigen, nichtmetallischen, plättchenförmigen Substraten bekannt, die mindestens ein Schichtpaket aus einer farblosen niedrigbrechenden und einer reflektierenden, selektiv oder nicht selektiv absorbierenden Beschichtung aufweisen.

Die aus dem Stand der Technik bekannten Mehrschichtpigmente sind teilweise aus nicht oder wenig lichtdurchlässigen Schichtmaterialien aufgebaut und daher in der Anwendung nur sehr beschränkt mit Absorptionspigmenten zu kombinieren. Die Interferenzfarbe dieser Pigmente ist darüber hinaus sehr stark vom Betrachtungswinkel abhängig, was in der Mehrzahl der Anwendungen nicht erwünscht ist. Weiterhin sind diese Pigmente zum Teil sehr schwer herstellbar bzw. reproduzierbar.

Aufgabe der vorliegenden Erfindung ist es farbige Mehrschichtpigmente mit einer hohen Farbstärke zur Verfügung zu stellen, die keine ausgeprägte Goniochromatizität besitzen, sich durch ihre vorteilhaften Anwendungseigenschaften auszeichnen und gleichzeitig auf einfache Art und Weise hergestellt werden können.

Überraschenderweise wurden nun farbige Pigmente auf Basis von mehrfach beschichteten plättchenförmigen Substraten gefunden, die eine bestimmte Anordnung optisch funktioneller Schichten und eine äußere Schicht bestehend aus Absorptionspigmenten aufweisen, wodurch besondere Farbeffekte erzielt werden.

Pigmente mit farbigen Pigmentpartikeln sind beispielsweise aus der DE-PS-23 13 332 und DE-PS-33 34 596 bekannt. Die dort beschriebenen Pigmente basieren auf plättchenförmigen Substraten, die mit einer Metalloxidschicht beschichtet sind und nachfolgend mit Berliner Blau belegt sind. Bei den Pigmenten aus dem Stand der Technik handelt es sich aber nicht um Mehrschichtpigmente. Die erfindungsgemäßen farbigen Mehrschichtpigmente zeichnen sich gegenüber den Pigmenten aus dem Stand der Technik durch ihre außerordentlich hohe Buntheit C ("Farbstärke"), hohes Deckvermögen, ihre hohe Farbreinheit der Interferenzfarbe und einen sehr starken Glanz aus und weisen im Gegensatz zu den goniochromatischen Pigmenten aus dem Stand der Technik keine bzw. nur eine geringfügige Winkelabhängigkeit der Interferenzfarbe auf.

Gegenstand der Erfindung sind somit farbige Pigmente auf der Basis von mehrfach beschichteten plättchenförmigen Substraten, dadurch gekennzeichnet, dass sie

(A) eine Beschichtung mit einem Brechungsindex von n > 1,8 und einer Schichtdicke von 20 - 500 nm,

(B) eine farblose Beschichtung mit einem Brechungsindex von n ≤ 1,8 und einer Schichtdicke von 10 - 100 nm,

(C) eine farblose Beschichtung mit einem Brechungsindex von n > 1,8 und einer Schichtdicke von 20 - 500 nm,

(D) eine Belegung mit absorbierenden Pigmentpartikeln mit einer Teilchengröße von 1 - 500 nm, und optional

(E) eine äußere Schutzschicht
enthalten.

Gegenstand der Erfindung ist weiterhin die Verwendung der erfindungsgemäßen Pigmente in Farben, Lacken, Druckfarben, Kunststoffen, keramischen Materialien, Gläsern und zur Lasermarkierung. Aufgrund der hohen Farbkraft sind die erfindungsgemäßen Pigmente insbesondere für die dekorative Kosmetik geeignet. Weiterhin sind die erfindungsgemäßen Pigmente auch zur Herstellung von Pigmentpräparationen sowie zur Herstellung von Trockenpräparaten, wie z.B. Granulaten, Chips, Pellets, Briketts, etc., geeignet. Die Trockenpräparate sind insbesondere für Druckfarben und Lacke geeignet.

Geeignete Basissubstrate für die erfindungsgemäßen farbigen Pigmente sind transparente plättchenförmige Substrate. Bevorzugte Substrate sind Schichtsilikate. Insbesondere geeignet sind natürlicher und/oder synthetischer Glimmer, Talkum, Kaolin, plättchenförmige Eisen- oder Aluminium-Oxide, Glas-, $SiO_2$-, $TiO_2$-, Graphitplättchen, synthetische trägerfreie Plättchen, BiOCl oder andere vergleichbare Materialien.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, insbesondere zwischen 0,1 und 4,5 µm. Die Ausdehnung in den beiden anderen Bereichen beträgt üblicherweise zwischen 1 und 250 µm, vorzugsweise zwischen 2 und 200 µm, und insbesondere zwischen 5 und 60 µm. Die Dicke der einzelnen Schichten auf dem Basissubstrat ist wesentlich für die optischen Eigenschaften des Pigments. Insbesondere die Schicht (B) beeinflusst wesentlich die Farbeigenschaften. Die Schicht (B) sollte gegenüber den Schichten (A) und (C) vergleichsweise dünn sein. Vorzugsweise ist das Verhältnis der Schichtdicke (A) bzw. (C) zu (B) 2 : 1 bis 5 : 1. Bei Schichtdicken (B) kleiner 100 nm nimmt die Abhängigkeit des Bunttonwinkels vom Betrachtungswinkel in der Weise ab, dass man nur die Interferenzfarbe des erfindungsgemäßen Pigments sieht, d.h. man beobachtet keinen winkelabhängigen Farbwechsel zwischen mehreren intensiven Interferenzfarben.

Für ein Pigment mit hoher Farbkraft muss die Dicke der einzelnen Schichten genau aufeinander eingestellt werden.

Die erfindungsgemäßen Interferenzpigmente weisen alternierend eine hochbrechende Schicht (A) bzw. (C) und eine niedrigbrechende Schicht (B) auf. Die hochbrechenden Schichten (A) und (C) besitzen einen Brechungsindex von n > 1,8, vorzugsweise von n ≥ 2,0.

Die Schicht (A) besteht vorzugsweise aus $TiO_2$, $ZrO_2$, $SnO_2$, $ZnO$, $BiOCl$, $Ce_2O_3$, $Fe_2O_3$, $Fe_3O_4$, $Cr_2O_3$, Ti-Suboxide ($TiO_2$ teilweise reduziert mit Oxidationszahlen von < 4 bis 2 wie die niederen Oxide $Ti_3O_5$, $Ti_2O_3$ bis zu TiO), Titanoxynitride sowie Titannitrid, $CoO$, $Co_3O_4$, $VO_2$, $V_2O_3$, $NiO$, $CoAl_2O_4$, $BiVO_4$, $Ce_2S_3$, $MoS_2$ bzw. Gemische oder Kombinationen davon. Gegebenenfalls können auch die Oxidgemische in reduzierter Form vorliegen. Besonders bevorzugt handelt es sich bei der Schicht (A) um eine farblose Schicht, insbesondere um eine $TiO_2$-Schicht. Das $TiO_2$ kann dabei in der Rutil- und in der Anatasmodifikation vorliegen, vorzugsweise handelt es sich um Rutil.

Die Dicke der Schicht (A) beträgt 20 bis 500 nm, vorzugsweise 30 nm bis 400 nm und insbesondere 40 bis 350 nm.

Als farblose niedrigbrechende für die Beschichtung (B) geeignete Materialien sind vorzugsweise Metalloxide bzw. die entsprechenden Oxidhydrate, wie z.B. $SiO_2$, $Al_2O_3$, $AlO(OH)$, $B_2O_3$, $MgF_2$, $MgSiO_3$ oder ein Gemisch der genannten Metalloxide, geeignet. Vorzugsweise besteht die Schicht (B) aus $SiO_2$, $MgF_2$ oder $Al_2O_3$ oder deren Gemischen.

Für die optischen Eigenschaften der erfindungsgemäßen Pigmente ist es von Vorteil, wenn die Schicht (B) sehr dünn ist. Die Dicke der Schicht (B) beträgt 10 bis 100 nm, vorzugsweise 10 bis 90 nm und insbesondere 20 bis 80 nm.

Die Schicht (C) besteht vorzugsweise aus $TiO_2$, $ZrO_2$, $ZnO$, $SnO_2$, $Ce_2O_3$, $BiOCl$, bzw. Gemische oder Kombinationen davon. Besonders bevorzugt handelt es sich bei der Schicht (C) um eine $TiO_2$ kann dabei in der Rutil- und in der Anatasmodifikation vorliegen, vorzugsweise handelt es sich um Rutil.

Die Dicke der Schicht (C) beträgt 20 bis 500 nm, vorzugsweise 30 bis 400 nm und insbesondere 40 bis 350 nm.

Die Schicht (D) besteht aus absorbierenden Pigmentpartikeln, die eine Teilchengröße von 1 bis 500 nm, vorzugsweise von 2 bis 400 nm, insbesondere von 3 bis 300 nm besitzen. Geeignete Pigmentpartikel sind organische und anorganische Farbpigmente, Berliner Blau, Bismuthvanadat, Goethit, Magnetit. Geeignete anorganische Farbpigmente sind insbesondere Hämatit, Chromoxid und Chromhydroxid, Cobaltaluminat, Ultramarin, Chrom-Eisen-Mischoxide, Spinelle wie z.B. Tenards Blau, Cadmiumsulfide oder -selenide, Chromat-Pigmente, Ruß. Bei den geeigneten organischen Farbpigmenten sind insbesondere zu nennen. Chinacridone, Benzimidazolone, Kupferphthalocyanin, Azopigmente, Indanthrene, 1,4-Diketopyrrolo-pyrrole, Perinone, Anthanthrone, Phthalocyanine, Anthrachinone, Indigo, Thioindigo und deren Derivate und Karminrot.

Die Schicht (D) besteht insbesondere aus Berliner Blau, Magnetit, Karminrot und/oder Thioindigo.

Der Gewichtsanteil der Farbpigmente in der Schicht (D) bezogen auf das Gesamtpigment beträgt 0,1 bis 50 Gew.%, vorzugsweise 0,5 bis 30 Gew.% und insbesondere 1 bis 20 Gew.%. Die Dicke der Schicht (D) beträgt 1 bis 500 nm, vorzugsweise 3 bis 400 nm und insbesondere 5 bis 300 nm.

Durch die Beschichtung der Substrate mit einer hochbrechenden Schicht (A), einer niedrigbrechenden Schicht (B), einer weiteren farblosen hochbrechenden Schicht (C) und einer absorbierenden Schicht (D) entstehen farbige Pigmente, deren Farbe, Glanz, Deckvermögen in weiten Grenzen variiert werden können.

Besonders bevorzugte Farbpigmente weisen folgende Schichtenfolgen auf:

Substrat + $TiO_2$ (A) + $SiO_2$ (B) + $TiO_2$ (C) + Berliner Blau (D)

$$\text{Substrat} + TiO_2\ (A) + SiO_2\ (B) + TiO_2\ (C) + \text{Magnetit (D)}$$

$$\text{Substrat} + TiO_2\ (A) + SiO_2\ (B) + TiO_2\ (C) + \text{Thioindigo (D)}$$

$$\text{Substrat} + TiO_2\ (A) + SiO_2\ (B) + TiO_2\ (C) + \text{Karminrot (D)}$$

$$\text{Substrat} + Fe_2O_3\ (A) + SiO_2\ (B) + TiO_2\ (C) + \text{Berliner Blau (D)}$$

$$\text{Substrat} + TiO_2\ (A) + SiO_2\ (B) + TiO_2\ (C) + \text{Cobaltaluminat (D)}$$

Die erfindungsgemäßen Pigmente lassen sich leicht herstellen durch die Erzeugung hoch- und niedrigbrechender Interferenzschichten mit genau definierter Dicke und glatter Oberfläche auf den feinteiligen, plättchenförmigen Substraten.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet und gegebenenfalls geglüht, wobei die Glühtemperatur in Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Die Herstellung von Ti-Suboxid-Schichten kann z.B. erfolgen durch Reduktion der $TiO_2$-Schicht mit Ammoniak, Wasserstoff sowie auch Kohlenwasserstoffen und Kohlenwasserstoff/Ammoniak-Gemischen wie z.B. beschrieben in EP-A- 0 332 071, DE 19 51 696.8 und DE 19 51 697.7.

Der Farbton der Pigmente kann in weiten Grenzen durch unterschiedliche Wahl der Belegungsmengen bzw. der daraus resultierenden Schichten variiert werden. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017, DE-A 33 34 598, DE 40 30 727 A1, EP 0 649 886 A2, WO 97/29059, WO 99/57204, U.S. 5,759,255 beschriebenen Verfahren in Frage. Durch diese Nachbeschichtung (Schicht E) wird die chemische Stabilität der Pigmente weiter erhöht oder die Handhabung des Pigments, insbesondere die Einarbeitung in unterschiedliche Medien, erleichtert.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z.B. für Gewächshausfolien, sowie z.B. für die Farbgebung von Zeltplanen, geeignet.

Es versteht sich von selbst, dass für die verschiedenen Anwendungszwecke die Mehrschichtpigmente auch vorteilhaft in Abmischung mit organischen Farbstoffen, organischen Pigmenten oder anderen Pigmenten, wie z.B.

transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Glimmer- und $SiO_2$-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten. Die Pigmentpräparationen und Trockenpräparate zeichnen sich dadurch aus, dass sie ein oder mehrere erfindungsgemäße Pigmente, Bindemittel und optional ein oder mehrere Additive enthalten.

Gegenstand der Erfindung ist somit auch die Verwendung der Pigmente in Formulierungen wie Farben, Druckfarben, Lacken, Kunststoffen, keramischen Materialien, Gläsern, in kosmetischen Formulierungen, zur Lasermarkierung und zur Herstellung von Pigmentpräparationen und Trockenpräparaten.

Die nachfolgenden Beispiele sollen die Erfindung näher erläutern ohne sie jedoch zu beschränken.

Beispiele

Beispiel 1

Schritt 1.1

100 g Glimmer der Teilchengröße 10-60 μm werden in 2 l VE-Wasser suspendiert und unter starkem Rühren auf 80 °C erhitzt. Zu dieser Suspension werden bei pH = 2,2 270 ml $TiCl_4$-Lösung (400 g $TiCl_4$/l) zudosiert. Danach wird der pH-Wert mit Natronlauge (32 %) auf 7,5 eingestellt und bei diesem pH-Wert werden 222 ml Natronwasserglaslösung (13,5 % $SiO_2$) zudosiert. De pH-Wert wird dabei mit Salzsäure (10 %) konstant gehalten. Anschließend werden bei pH 2,2 270 ml $TiCl_4$-Lösung (400 g $TiCl_4$/l zudosiert. Der pH-Wert wird bei der Zugabe der $TiCl_4$-Lösung jeweils mit NaOH-Lösung (32 %) konstant gehalten. Zur Aufarbeitung wird das Pigment abfiltriert, mit VE-Wasser gewaschen, bei 110 °C getrocknet und 30 min bei 850 °C geglüht.

Schritt 1.2 (Belegung mit Berliner Blau)

130 g Interferenz-Rot-Pigment aus Schritt 1.1 werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 2,6 g $FeSO_4$ x 7 $H_2O$, 0,06 g Schwefelsäure (ca. 97 %) und 65 g VE-Wasser zudosiert. Dabei wird der pH-Wert mit Ammoniumhydroxid-Lösung (10 %) konstant gehalten. Anschließend wird innerhalb von ca. 70 min eine Lösung von 3,64 g $K_4[Fe(CN)_6]$ x 3 $H_2O$ in 195 g VE-Wasser zudosiert und 30 min nachgerührt. Während der gesamten Reaktion wird Luft (4-6 l/h) in die Suspension eingeblasen. Das Pigment wird auf einer Filternutsche abgesaugt, mit VE-Wasser gewaschen, 12 h bei 100 °C getrocknet und gesiebt (Maschenweite 100 μm).

Man erhält ein blaues Pigmentpulver mit kräftigem rotem Perlglanz.

Beispiel 2

Schritt 2.1

100 g Glimmer der Teilchengröße 10-60 μm werden in 2 l VE-Wasser suspendiert und unter starkem Rühren auf 80 °C erhitzt. Zu dieser Mischung werden bei pH = 2,2 200 ml $TiCl_4$-Lösung (400 g $TiCl_4$/l) zudosiert. Danach wird der pH-Wert mit Natronlauge (32 %) auf 7,5 eingestellt und bei diesem pH-Wert werden 212 ml Natronwasserglaslösung (13,5 % $SiO_2$) zudosiert. Der pH-Wert wird dabei mit Salzsäure (10 %) konstant gehalten. Anschließend werden bei pH 2,2 220 ml $TiCl_4$-Lösung (400 g $TiCl_4$/l) zudosiert. Der pH-Wert wird bei der Zugabe der $TiCl_4$-Lösung jeweils mit NaOH-Lösung (32 %) konstant gehalten. Zur Aufarbeitung wird das Pigment abfiltriert, mit VE-Wasser gewaschen, bei 110 °C getrocknet und 30 min bei 850 °C geglüht.

Schritt 2.1 (Belegung mit Berliner Blau)

130 g Interferenz-Gold-Pigment aus Schritt 2.1 werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 2,6 g $FeSO_4$ x 7 $H_2O$, 0,06 g Schwefelsäure (ca. 97 %) und 65 g VE-Wasser zudosiert. Dabei wird der pH-Wert mit Ammoniumhydroxid-Lösung (10 %) konstant gehalten. Anschließend wird innerhalb von ca. 70 min eine Lösung von 3,64 g $K_4[Fe(CN)_6]$ x 3 $H_2O$ in 195 g VE-Wasser zudosiert und 30 min nachgerührt. Während der gesamten Reaktion wird Luft (4-6 l/h) in die Suspension eingeblasen. Das Pigment wird auf einer Filternutsche abgesaugt, mit VE-Wasser gewaschen, 12 h bei 100 °C getrocknet und gesiebt (Maschenweite 100 μm).

Man erhält ein blaues Pigmentpulver mit kräftigem goldenem Perlganz.

Beispiel 3

Schritt 3.1

100 g Glimmer der Teilchengröße 10-60 μm werden in 2 l VE-Wasser suspendiert und unter starkem Rühren auf 80 °C erhitzt. Zu dieser Suspension werden bei pH = 2,2 300 ml $TiCl_4$-Lösung (400 g $TiCl_4$/l) zudosiert. Danach wird der pH-Wert mit Natronlauge (32 %) auf 7,5 angehoben und bei diesem pH-Wert werden 222 ml Natronwasserglaslösung (13,5 % $SiO_2$) zudosiert. Der pH-Wert wird dabei mit Salzsäure (10 %) konstant gehalten. Anschließend werden bei pH = 2,2 300 ml $TiCl_4$-Lösung (400 g $TiCl_4$/l) zudosiert. Der pH-Wert wird bei der Zugabe der $TiCl_4$-Lösung jeweils mit NaOH-Lösung (32 %) konstant gehalten. Zur Aufarbeitung wird das Pigment abfiltriert, mit Wasser gewaschen, bei 110 °C getrocknet und 30 min bei 850 °C geglüht.

Schritt 3.2 (Belegung mit Berliner Blau)

130 g Interferenz-Violett-Pigment aus Schritt 3.1 werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 2,6 g $FeSO_4$ x 7 $H_2O$, 0,06 g Schwefelsäure (ca. 97 %) und 65 g VE-Wasser innerhalb von 45 min zudosiert. Dabei wird der pH-Wert mit Ammoniumhydroxid-Lösung (10 %) konstant gehalten. Anschließend wird innerhalb von 70 min eine Lösung von 3,64 g $K_4[Fe(CN)_6]$ x 3 $H_2O$ in 195 g VE-Wasser zudosiert und 30 min nachgerührt. Während der gesamten Reaktion wird Luft (4-6 l/h) in die Suspension eingeblasen. Das Pigment wird auf einer Filternutsche abgesaugt, mit Wasser gewaschen, 12 h bei 100 °C getrocknet und gesiebt (Maschenweite 100 μm).

Man erhält ein blaues Pigmentpulver mit violettem Perlglanz.

Beispiel 4 (Belegung mit Berliner Blau)

130 g Interferenz-Violett-Pigment aus Beispiel 1/Schritt 1.1 werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 31,2 g $FeSO_4$ x 7 $H_2O$, 0,8 g Schwefelsäure (ca. 97 %) und 780 g VE-Wasser innerhalb von 6 h zudosiert. Dabei wird der pH-Wert mit Ammoniumhydroxid-Lösung (10 %) konstant gehalten. Anschließend wird innerhalb von 70 min eine Lösung von 43,7 g $K_4[Fe(CN)_6]$ x 3 $H_2O$ in 2,3 l VE-Wasser zudosiert und 30 min nachgerührt. Während der gesamten Reaktion wird Luft (4-6 l/h) in die Suspension eingeblasen. Das Pigment wird auf einer Filternutsche abgesaugt, mit VE-Wasser gewaschen, 12 h bei 100 °C getrocknet und gesiebt (Maschenweite 100 μm).

Man erhält ein tiefblaues Pigmentpulver mit violettem Perlglanz.

Beispiel 5 (Belegung mit Magnetit)

130 g Goldinterferenzpigmentbasis aus Beispiel 2/Schritt 2.1 werden in 2 l VE-Wasser suspendiert und auf 75 °C erhitzt. Nachdem der pH-Wert mit NaOH-Lösung (32 %) auf pH 8,0 eingestellt wurde, wird eine Lösung von 18 g $FeSO_4$ x 7 $H_2O$ und 3,0 g $KNO_3$ und 1 ml Schwefelsäure (20 %) in 50 ml VE-Wasser zudosiert. Dabei wird beständig Stickstoff durch die Suspension (130 l/h) geleitet und der pH-Wert mit NaOH-Lösung (32 %) bei pH = 8,0 gehalten. Das Produkt wird abfiltriert, mit Wasser gewaschen, 4 h bei 110 °C getrocknet und gesiebt (Maschenweite 100 μm).

Man erhält ein graues Pigmentpulver mit goldenem Perlglanz.

Anwendungsbeispiele

Beispiel A: Nagellack

| 2,00 % | Pigment aus Beispiel 2 (1) |
|---|---|

(fortgesetzt)

| 98,00 % | Thixotrope Nagellack-Base 1348 (Toluene, Ethyl acetate, Butyl acetate, Nitrocellulose, tosylamide/ Formaldehyde, Resin, Dibutyl phthalate, Isopropyl Alcohol, Stearalkonium hectorite, Camphor, Acrylates Copolymer, Benzophenone-1 (2) |

Bezugsquellen:

(1) Merck KGaA
(2) International Lacquers S.A.

Beispiel B: Lidschatten

| Phase A | |
|---|---|
| 30,00 % | Pigment aus Beispiel 2 (1) |
| 49,50 % | Talc (1) |
| 7,50 % | Potato Starch (Solanum Tuberosum) (2) |
| 2,50 % | Magnesium Stearate (1) |

| Phase B | |
|---|---|
| 9,14 % | Isopropyl stearate (3) |
| 0,53 % | Cetyl palmitate (1) |
| 0,53 % | Ewalin 1751 (Petrolatum) (4) |
| 0,20 % | Fragrance Elegance # 79228 D MF (Parfum) (5) |
| 0,10 % | Propyl-4-hydroxybenzoate (Propylparaben) (1) |

Die Bestandteile der Phase A werden homogen gemischt. Anschließend wird die Pudermischung unter Rühren mit der geschmolzenen Phase B versetzt. Die Puder werden bei 40-50 bar gepresst.

Bezugsquellen:

(1) Merck KGaA
(2) Südstärke GmbH
(3) Cognis GmbH
(4) H. Erhard Wagner GmbH
(5) Haarmann & Reimer GmbH

Beispiel C: Lippenstift

| Phase A | |
|---|---|
| 15,00 % | Pigment aus Beispiel 2 (1) |

| Phase B | |
|---|---|
| 8,75 % | Beeswax white (Cera alba) (1) |

(fortgesetzt)

| Phase B | |
|---|---|
| 5,25 % | Paracera C 44 (Copernicia Cerifera (Carnauba wax, Ceresin) (2) |
| 3,50 % | Adeps Lanae (Lanolin) (3) |
| 5,60 % | Isopropyl myristate (4) |
| 2,10 % | Paraffin viscous (Paraffinum Liquidum (Mineral Oil) (1) |
| 0,05 % | OXYNEX® Kliquid (PEG-8, Tocopherol, Ascorbyl palmitate, Ascorbic acid, Citric acid) (1) |
| 0,10 % | Propyl-4-hydroxybenzoate (Propylparaben) (1) |
| 59,45 % | Castor Oil (Ricinus Communis) (3) |

| Phase C | |
|---|---|
| 0,20 % | Fragrance Tendresse # 75418C (Parfum) (5) |

Die Bestandteile der Phase B werden auf 75 °C erhitzt und aufgeschmolzen. Die Pigmente der Phase A werden zugegeben und alles wird gut durchrührt. Die Lippenstiftmasse wird dann in der auf 65 °C temperierten Gießapparatur mit dem Parfüm aus Phase C 15 Minuten gerührt. Die homogene Schmelze wird in die auf 55 °C vorgewärmten Gießformen gegossen. Anschließend kühlt man die Formen ab und entfernt die Gießlinge kalt.

Bezugsquellen:

   (1) Merck KGaA
   (2) Paramelt
   (3) Henry Lamotte GmbH
   (4) Cognis GmbH
   (5) Haarmann & Reimer GmbH

**Patentansprüche**

1. Farbige Pigmente auf der Basis von mehrfach beschichteten plättchenförmigen Substraten **dadurch gekennzeichnet, dass** sie

   (A) eine Beschichtung mit einem Brechungsindex von n > 1,8 und einer Schichtdicke von 20 - 500 nm,

   (B) eine farblose Beschichtung mit einem Brechungsindex von n ≤ 1,8 und einer Schichtdicke von 10 - 100 nm,

   (C) eine farblose Beschichtung mit einem Brechungsindex von n > 1,8 und einer Schichtdicke von 20 - 500 nm,

   (D) eine Belegung mit absorbierenden Pigmentpartikeln mit einer Teilchengröße von 1 - 500 nm, und optional

   (E) eine äußere Schutzschicht
   enthalten.

2. Farbige Pigmente nach Anspruch 1, **dadurch gekennzeichnet, dass** es sich bei den plättchenförmigen Substraten um natürlichen oder synthetischen Glimmer, Glas-, $Al_2O_3$-, $SiO_2$- oder $TiO_2$-Plättchen handelt.

3. Farbige Pigmente nach Anspruch 1 oder 2, **dadurch gekennzeichnet, dass** die Schicht (A) aus $TiO_2$, $ZrO_2$, ZnO oder BiOCl besteht.

4. Farbige Pigmente nach einem der Ansprüche 1 bis 3, **dadurch gekennzeichnet, dass** die Schicht (B) aus $SiO_2$,

MgF$_2$ oder Al$_2$O$_3$ oder deren Gemischen besteht.

5. Farbige Pigmente nach einem der Ansprüche 1 bis 4, **dadurch gekennzeichnet, dass** es sich bei den absorbierenden Pigmentpartikeln um Berliner Blau, Magnetit, Karminrot und/oder Thioindigo handelt.

6. Farbige Pigmente nach einem der Ansprüche 1 bis 5, **dadurch gekennzeichnet, dass** die Schicht (A) und die Schicht (C) dieselbe Zusammensetzung haben.

7. Farbige Pigmente nach Anspruch 6, **dadurch gekennzeichnet, dass** die Schicht (A) und die Schicht (C) aus TiO$_2$ bestehen.

8. Verfahren zur Herstellung der farbigen Pigmente nach Anspruch 1, **dadurch gekennzeichnet, dass** die Beschichtung der plättchenförmigen Substrate nasschemisch durch hydrolytische Zersetzung von Metallsalzen in wässrigem Medium oder durch CVD- oder PVD-Verfahren erfolgt.

9. Verwendung der farbigen Pigmente nach Anspruch 1 in Farben, Lacken, Druckfarben, Kunststoffen, keramischen Materialien, Gläsern, in kosmetischen Formulierungen, zur Lasermarkierung und zur Herstellung von Pigmentpräparationen und Trockenpräparaten.

10. Pigmentpräparationen enthaltend ein oder mehrere Bindemittel, optional ein oder mehrere Additive und ein oder mehrere farbige Pigmente gemäß Anspruch 1.

11. Trockenpräparate wie Pellets, Granulate, Chips, Briketts enthaltend farbstarke Interferenzpigmente nach Anspruch 1.

**Europäisches Patentamt**

## EUROPÄISCHER RECHERCHENBERICHT

Nummer der Anmeldung

EP 02 00 7357

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 196 18 569 A (MERCK PATENT GMBH) 13. November 1997 (1997-11-13) * Zusammenfassung * * Spalte 2, Zeile 38 - Spalte 3, Zeile 57; Ansprüche 1-9; Beispiele 1,7 * * Spalte 5, Zeile 15 - Zeile 38 * | 1-9 | C09C1/00 |
| Y | EP 0 950 693 A (MERCK PATENT GMBH) 20. Oktober 1999 (1999-10-20) * Absatz '0010! - Absatz '0022!; Beispiele 1,3 * | 1,5 | |
| D,Y | DE 23 13 332 A (MERCK PATENT GMBH) 19. September 1974 (1974-09-19) * Seite 1, Zeile 15 - Zeile 24; Beispiele 1A,1B,,2 * * Seite 9, Zeile 8 - Seite 11, Zeile 5; Ansprüche 1,7 * | 1,5 | |
| D,A | EP 0 141 173 A (MERCK PATENT GMBH) 15. Mai 1985 (1985-05-15) * Seite 2, Zeile 12 - Zeile 17; Beispiel 1 * | 1,5 | **RECHERCHIERTE SACHGEBIETE (Int.Cl.7)** C09C |
| A | EP 0 449 016 A (MERCK PATENT GMBH) 2. Oktober 1991 (1991-10-02) * das ganze Dokument * | 1-9 | |

Der vorliegende Recherchenbericht wurde für alle Patentansprüche erstellt

| Recherchenort | Abschlußdatum der Recherche | Prüfer |
|---|---|---|
| DEN HAAG | 13. August 2002 | Siebel, E |

EPO FORM 1503 03 82 (P04C03)

## ANHANG ZUM EUROPÄISCHEN RECHERCHENBERICHT
## ÜBER DIE EUROPÄISCHE PATENTANMELDUNG NR.

EP 02 00 7357

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 19618569 | A | 13-11-1997 | WO | 9853011 | A1 | 26-11-1998 |
| | | | | DE | 19618569 | A1 | 13-11-1997 |
| | | | | TW | 438866 | B | 07-06-2001 |
| | | | | BR | 9710753 | A | 14-09-1999 |
| | | | | EP | 0948572 | A1 | 13-10-1999 |
| | | | | JP | 2000517374 | T | 26-12-2000 |
| EP | 0950693 | A | 20-10-1999 | DE | 19817286 | A1 | 21-10-1999 |
| | | | | CN | 1232843 | A | 27-10-1999 |
| | | | | EP | 0950693 | A1 | 20-10-1999 |
| | | | | JP | 2000001628 | A | 07-01-2000 |
| | | | | US | 6280520 | B1 | 28-08-2001 |
| DE | 2313332 | A | 19-09-1974 | DE | 2313332 | A1 | 19-09-1974 |
| | | | | ES | 424358 | A1 | 16-10-1976 |
| | | | | FR | 2221500 | A1 | 11-10-1974 |
| | | | | GB | 1430701 | A | 07-04-1976 |
| | | | | IT | 1011084 | B | 20-01-1977 |
| | | | | JP | 1099811 | C | 18-06-1982 |
| | | | | JP | 49128028 | A | 07-12-1974 |
| | | | | JP | 56042634 | B | 06-10-1981 |
| | | | | US | 3951679 | A | 20-04-1976 |
| EP | 0141173 | A | 15-05-1985 | DE | 3334596 | A1 | 18-04-1985 |
| | | | | AU | 573759 | B2 | 23-06-1988 |
| | | | | AU | 3335684 | A | 09-05-1985 |
| | | | | BR | 8404766 | A | 13-08-1985 |
| | | | | CA | 1229528 | A1 | 24-11-1987 |
| | | | | CS | 250670 | B2 | 14-05-1987 |
| | | | | DE | 3468043 | D1 | 21-01-1988 |
| | | | | EP | 0141173 | A1 | 15-05-1985 |
| | | | | ES | 536134 | D0 | 01-06-1986 |
| | | | | ES | 8608022 | A1 | 16-11-1986 |
| | | | | FI | 843711 | A ,B, | 25-03-1985 |
| | | | | HU | 36162 | A2 | 28-08-1985 |
| | | | | IN | 162364 | A1 | 14-05-1988 |
| | | | | JP | 60092358 | A | 23-05-1985 |
| | | | | PL | 249687 | A2 | 07-05-1985 |
| | | | | US | 4545821 | A | 08-10-1985 |
| | | | | ZA | 8407469 | A | 24-04-1985 |
| EP | 0449016 | A | 02-10-1991 | DE | 4009567 | A1 | 26-09-1991 |
| | | | | EP | 0449016 | A1 | 02-10-1991 |
| | | | | JP | 4227666 | A | 17-08-1992 |
| | | | | US | 5156678 | A | 20-10-1992 |

EPO FORM P0461

Für nähere Einzelheiten zu diesem Anhang : siehe Amtsblatt des Europäischen Patentamts, Nr. 12/82